# EUROPÄISCHE PATENTSCHRIFT

(11) **EP 1 189 416 B1**
(45) Veröffentlichungstag und Bekanntmachung des Hinweises auf die Patenterteilung: **27.09.2006**
(21) Anmeldenummer: 01120071.4
(22) Anmeldetag: 21.08.2001
(51) Int. Cl.: H04M 3/42

(54) **Verfahren und Vorrichtung zur Abfrage der eingerichteten Rufnummern eines Anschlusses**
Method and system for the request of the telephone numbers associated with the access point
Méthode et système pour la requête du numéro d'abonné associé avec la borne de connection

(30) Priorität: 19.09.2000 DE 10046252
(43) Veröffentlichungstag der Anmeldung: 20.03.2002
(73) Patentinhaber: Deutsche Telekom AG, 53113 Bonn (DE)
(72) Erfinder: Dihlmann, Klaus-Dieter, 64839 Münster-Altheim (DE); Hellenthal, Hans Georg, 51105 Köln (DE); Bandow, Gerhard, 64347 Griesheim (DE)
(74) Vertreter: Deuschel, Wilhelm

(56) Entgegenhaltungen:
- WO-A-87/06421
- "Integrated Services Digital Network (ISDN); Diversion supplementary services; Digital Subscriber Signalling System No. one (DSS1) protocol; Part 1: Protocol specification" EN 300 207-1 V1.2.5, XX, XX, 30. Oktober 1998 (1998-10-30), XP002237578

## Beschreibung

Die Erfindung betrifft ein Verfahren gemäß der im Oberbegriff des Anspruches 1 angegebenen Art.

Im Bereich der digitalen Vermittlungstechnik sind Telekommunikationsendgeräte, wie Telefone, Telefaxgeräte, Modems, Mobiltelefone oder ähnliches, über einen Basisanschluss an ein aus Zugangsleitungsnetzen und Verbindungsleitungsnetzen bestehendes Leitungsnetz zur Übertragung von digitalen und analogen Signalen angeschlossen. Insbesondere bei ISDN-Basisanschlüssen können einem Basisanschluss von dem Netzbetreiber bis zu zehn Rufnummern (MSN) zugeordnet werden, welche der Fernsprechteilnehmer dann individuell seinen speziellen Telekommunikationsendgeräten zuordnen kann. Diese Rufnummern werden vom Netzbetreiber administrativ dem Basisanschluss zugeteilt und zwar in der gewünschten Anzahl, wobei die Mitteilung der Rufnummern mit der Auftragsbestätigung zur Einrichtung eines Basisanschlusses schriftlich erfolgt.'

Die Rufnummern des Basisanschlusses werden von dem Netzbetreiber in der Vermittlungsstelle eingerichtet, dort abgespeichert und stehen dem Fernsprechteilnehmer mit Freischaltung des Basisanschlusses zur Verfügung.

Will nun der Fernsprechteilnehmer seine Telekommunikationsendgeräte konfigurieren oder weitere Rufnummern, die ihm bereits mitgeteilt wurden, einrichten, so benötigt er die schriftliche Auftragsbestätigung, um die Rufnummern (MSN), die ihm zugeteilt sind, herauszulesen und in seinen Telekommunikationsendgeräten einzutragen bzw. den entsprechenden Telekommunikationsendgeräten zuzuordnen. Dieses Verfahren ist äußerst aufwendig und zeitintensiv.

Weiterhin wird.in nicht seltenen Fällen wegen Verzögerungen auf dem Postweg der Basisanschluss mit den kundenindividuellen Rufnummern bereits vor dem Erhalt der schriftlichen Benachrichtigung durch den Fernsprechteilnehmer freigeschaltet oder von einem analogen auf einen digitalen Anschluss umgewandelt. In.diesen Fällen kann der Basisanschluss so lange nicht voll ausgenutzt werden, bis der Fernsprechteilnehmer seine individuellen Rufnummern (MSN) in Erfahrung gebracht und in seinen Telekommunikationsendeinrichtungen eingespeichert hat. Dies ist nicht nur für den Fernsprechteilnehmer sondern auch für den Netzbetreiber unbefriedigend.

Der Erfindung liegt die Aufgabe zugrunde, ein Verfahren gemäß der im Oberbegriff des Anspruchs 1 angegebenen Art derart weiterzubilden, dass unter Vermeidung der genannten Nachteile eine einfachere Abfrage der Rufnummern eines Anschlusses ermöglicht wird.

Diese Aufgabe wird für das Verfahren durch die kennzeichnenden Merkmale des Anspruches 1 in Verbindung mit seinen Oberbegriffsmerkmalen gelöst.

Weitere Lösungen bzw. Ausgestaltungen der Erfindung sind in den Patentansprüchen 2 bis 4 charakterisiert.

Der Erfindung liegt die Erkenntnis zugrunde, dass in der Vermittlungsstelle die Rufnummern für den Anschluss abgespeichert sind und die Vermittlungsstelle über das Zugangsleitungsnetz mit dem Anschluss und darüber mit einem Telekommunikationsendgerät eines Fernsprechteilnehmers verbindbar ist, wodurch die Voraussetzungen für eine online-Abfrage vorhanden sind.

Nach der Erfindung erfolgt daher die Abfrage der eingerichteten Rufnummern des Anschlusses von der dem Anschluss zugeordneten Vermittlungsstelle online über ein Telekommunikationsendgerät des Anschlusses. Hierdurch wird der Fernsprechteilnehmer jederzeit in die Lage versetzt, seine eingerichteten oder neu eingerichteten Rufnummern selbst abzufragen. Er kann sich dadurch jederzeit ein Bild darüber machen, wie viele und welche Rufnummern seinem Anschluss zugeordnet sind und daher seine Telekommunikationsendeinrichtungen jederzeit entsprechend konfigurieren und anpassen.

Gemäß einer Ausführungsform der Erfindung werden durch die Abfrage der eingerichteten Rufnummern keine anderen Dienstmerkmale des Anschlusses beeinflusst, beispielsweise gelöscht. Dies ist besonders wichtig, da eine Rekonstruktion der eingerichteten Zustände der einzelnen Rufnummern eines Anschlusses nicht möglich ist. Ansonsten müssten diese vorher erst erfasst, abgespeichert und anschließend wieder hergestellt werden, was jedoch aufwendig ist. Zudem soll die Funktion der anderen Dienstmerkmale während der Abfrage der Rufnummern auch nicht beeinträchtigt werden, d. h. sie sollen auch während der Abfrage der Rufnummern weiter in Funktion bleiben, sodass Fernsprechteilnehmer an anderen Telekommunikationsendgeräten dieses Anschlusses weiterhin ungestört ihr Telekommunikationsendgerät und das Leitungsnetz mit allen Dienstmerkmalen nutzen können.

Für die Abfrage sendet das Telekommunikationsendgerät an die Vermittlungsstelle ein vorbestimmtes, aus einem Signalblock bestehendes Signal. Insbesondere wird hierfür eine Verbindung zwischen dem Telekommunikationsendgerät und der Vermittlungsstelle hergestellt, dann das vorbestimmte Signal von dem Telekommunikationsendgerät an die Vermittlungsstelle gesandt, die Vermittlungsstelle vergleicht dieses Signal mit einem in der Vermittlungsstelle abgespeicherten Referenzsignal für das Dienstmerkmal "Abfrage der eingerichteten Rufnummern eines Anschlusses" und übermittelt bei Übereinstimmung des von dem Telekommunikationsendgerät gesandten Signals mit dem Referenzsignal die in der Vermittlungsstelle gespeicherten Rufnummern dieses Anschlusses an das Telekommunikationsendgerät. Auf einfache Weise wird hierdurch eine automatische Abfrage der Rufnummern von der Vermittlungsstelle des Leitungsnetzes verwirklicht.

Gemäß einer weiteren Ausführungsform der Erfindung erfolgt die Übermittlung der Rufnummern von der Vermittlungsstelle an das Telekommunikationsendgerät entsprechend dem Protokoll eines anderen Dienstmerkmals, insbesondere entsprechend dem Dienstmerkmal zur Abfrage des Telekommunikationsendgerätes, für welche der Rufnummern des Anschlusses eine Anrufweiterschaltung eingerichtet ist - "Interrogation Diversion Invoke"-Komponente -. Im vorliegenden Fall erfolgt somit die Antwort entsprechend der Abfrage der Anrufweiterschaltung für alle Rufnummern des Anschlusses und der Fernsprechteilnehmer kann daraus die Zahl und die Art der Rufnummern entnehmen. Dies hat den Vorteil, dass bereits bestehende Protokolle und Verfahren verwendet werden können, wodurch der Anpassungsaufwand im Telekommunikationsendgerät und der Vermittlungsstelle erheblich verringert wird.

Die Leitungsnetze, die Telekommunikationsendgeräte und vor allem auch die Vermittlungsstellen der Leitungsnetze unterliegen internationalen und nationalen Normen.

Zudem ist es für die Akzeptanz von Neuerungen auf dem Markt wichtig, dass möglichst bekannte Protokolle, Befehlsstrukturen und Abläufe von bekannten Dienstmerkmalen des Leitungsnetzes, der Vermittlungsstelle und des Telekommunikationsendgerätes verwendet werden. Hierbei bietet sich das bekannte Dienstmerkmal der Anrufweiterschaltung an, da dieses eine für das vorliegende Problem entsprechende Ablaufstruktur aufweist.

Beispielsweise gibt es bei der Anrufweiterschaltung die Schritte Aktivieren der Anrufweiterschaltung, Abfragen der Anrufweiterschaltung und Deaktivieren der Anrufweiterschaltung.

Bei der Aktivierung der Anrufweiterschaltung hat der Fernsprechteilnehmer die Möglichkeit, eine Anrufweiterschaltung rufnummernbezogen einzurichten, d. h. es steht ihm ein Verfahren zur Verfügung, mit dem der Fernsprechteilnehmer für bestimmte Rufnummern eine Anrufweiterschaltung zu einer im Leitungsnetz vorhandenen Zielrufnummer einrichten kann. Des Weiteren besteht die Möglichkeit, eine Anrufweiterschaltung für alle am Basisanschluss eingerichteten Rufnummern zu aktivieren.

Im D-Kanal kommt es dabei zu folgenden Verfahrensschritten: das Telekommunikationsendgerät sendet der Vermittlungsstelle einen Auftrag zur Umleitung ankommender Verbindungen und gibt dabei folgende Parameter an: Art der Umleitung (procedure), basic service, served user number (Rufnummer MSN) sowie die Zielrufnummer (forwarded to address). Die Einrichtung der Anrufweiterschaltung wird dem Telekommunikationsendgerät von der Vermittlungsstelle quittiert.

Ein weiterer Schritt im Zusammenhang mit der Anrufweiterschaltung ist die Abfrage der Anrufweiterschaltung. Hier hat der Fernsprechteilnehmer die Möglichkeit, von der Vermittlungsstelle mitgeteilt zu bekommen, welche Anrufweiterschaltungen rufnummernbezogen eingerichtet sind, d. h. es steht ihm ein Verfahren zur Verfügung, mit dem der Fernsprechteilnehmer von der Vermittlungsstelle mitgeteilt bekommt; welche Anrufweiterschaltungen rufnummernbezogen eingerichtet sind.

Für dieses Verfahren sendet das Telekommunikationsendgerät im D-Kanal eine sogenannte "Interrogate Served User Numbers Invoke"-Komponente zur Vermittlungsstelle und erhält eine Quittung, in welcher sämtliche Rufnummern, für welche Anrufweiterschaltungsaufträge eingerichtet wurden, aufgelistet sind. Details zu diesen einzelnen Anrufweiterschaltungen können vom Telekommunikationsendgerät im Anschluss daran abgefragt werden, nämlich für jeden Weiterschaltungsdienst, z. B. CFU (Call Forwarding Unconditional - Anrufweiterschaltung sofort), CFB (Call Forwarding Busy - Anrufweiterschaltung bei Besetzt) oder ähnliches, für einen individuellen oder für alle Dienste und für eine einzelne Rufnummer oder für alle Rufnummern am Anschluss.

Ein weiterer Schritt im Zusammenhang mit der Anrufweiterschaltung ist die Deaktivierung der Anrufweiterschaltung. Hier hat der Fernsprechteilnehmer die Möglichkeit, eine Anrufweiterschaltung rufnummernbezogen zu deaktivieren, d. h. es steht ihm ein Verfahren zur Verfügung, mit der der Fernsprechteilnehmer für eine bestimmte Rufnummer eine Anrufweiterschaltung zu einer im Netz vorhandenen Zielrufnummer deaktivieren kann. Des Weiteren besteht die Möglichkeit, eine Anrufweiterschaltung für alle am Anschluss eingerichteten Rufnummern zu deaktivieren.

Um die Anrufweiterschaltung zu deaktivieren, sendet das Telekommunikationsendgerät im D-Kanal eine "Deactivation Diversion Invoke"-Komponente und gibt folgende Parameter an: Umleitprozedur, "basic service", "all numbers" im Feld "served user number". Die erfolgreiche Ausführung wird dem Telekommunikationsendgerät wiederum quittiert.

Gemäß einer Ausführungsform der Erfindung sendet für die Abfrage das Telekommunikationsendgerät an die Vermittlungsstelle ein aus einer Folge von drei Signalblöcken eines anderen Dienstmerkmals bestehendes Signal, die nacheinander von dem Telekommunikationsendgerät an die Vermittlungsstelle gesendet werden.

Hierbei dient der erste Signalblock zur Aktivierung der Anrufweiterschaltung aller.Rufnummern des Anschlusses an eine fest definierte, jedoch physikalisch keinem Teilnehmer zugeordnete Zielrufnummer. Der zweite Signalblock betrifft die Abfrage der eingerichteten Anrufweiterschaltungen der Rufnummern eines Anschlusses und der dritte Signalblock dient zur Deaktivierung der Anrufweiterschaltungen aller Rufnummern des Anschlusses. Auf diese Weise kann das bestehende Verfahren einer Anrufweiterschaltung mit den entsprechenden Protokollen und Signalblöcken verwendet werden, um dieses neue Dienstmerkmal "Abfrage der eingerichteten Rufnummern eines Anschlusses" online über das Telekommunikationsendgerät einzurichten. Dies hat den Vorteil, dass nur geringe softwaretechnische Anpassungen notwendig sind und eine Umsetzung in bereits bestehenden Telekommunikationsendgeräten und Vermittlungsstellen ohne weiteres möglich ist.

Um für den Fernsprechteilnehmer die Abfrage der eingerichteten Rufnummern eines Anschlusses von seinem Telekommunikationsendgerät möglichst einfach zu gestalten, wird das Signal vom Telekommunikationsendgerät an die Vermittlungsstelle durch eine Kombination der Betätigung von Eingabemitteln, wie Mausklicks, durch eine Folge der Betätigung von Eingabemitteln und/oder eine Eingabe eines entsprechenden zugeordneten Eingabemittels, wie einer Task oder mehreren Tasten des Telekommunikationsendgerätes, ausgelöst.

Um insbesondere die Information, welche Rufnummern eingerichtet sind, auch zeitversetzt aus dem Telekommunikationsendgerät auslesen zu können, werden die von der Vermittlungsstelle übermittelten Rufnummern des Anschlusses im Telekommunikationsendgerät gespeichert.

Vorzugsweise können die übermittelten und/oder die gespeicherten Rufnummern in einer Anzeige des Telekommunikationsendgerätes dargestellt werden.

Weitere Vorteile, Merkmale und Anwendungsmöglichkeiten des vorliegenden Verfahrens zur Abfrage der eingerichteten Rufnummern eines Anschlusses sowie einer entsprechenden Vorrichtung zur Durchführung des Verfahrens ergeben sich aus der nachfolgenden Beschreibung in Verbindung mit dem in der Zeichnung dargestellten Ausführungsbeispiel.

Die Erfindung wird im folgenden anhand zweier in der Zeichnung dargestellten Ausführungsbeispiele näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:
- Fig. 1: eine schematische Darstellung eines Leitungsnetzes mit Anschlüssen für Telekommunikationsendgeräte;
- Fig. 2: eine schematische Darstellung des Verfahrens zur Abfrage der eingerichteten Rufnummern für einen Anschluss von Fig. 1 von einem Telekommunikationsgerät gemäß einem ersten Ausführungsbeispiel aus; und
- Fig. 3: eine schematische Darstellung des Verfahrens zur Abfrage der eingerichteten Rufnummern für einen Anschluss von Fig. 1 von einem Telekommunikationsendgerät gemäß einem zweiten Ausführungsbeispiel aus.

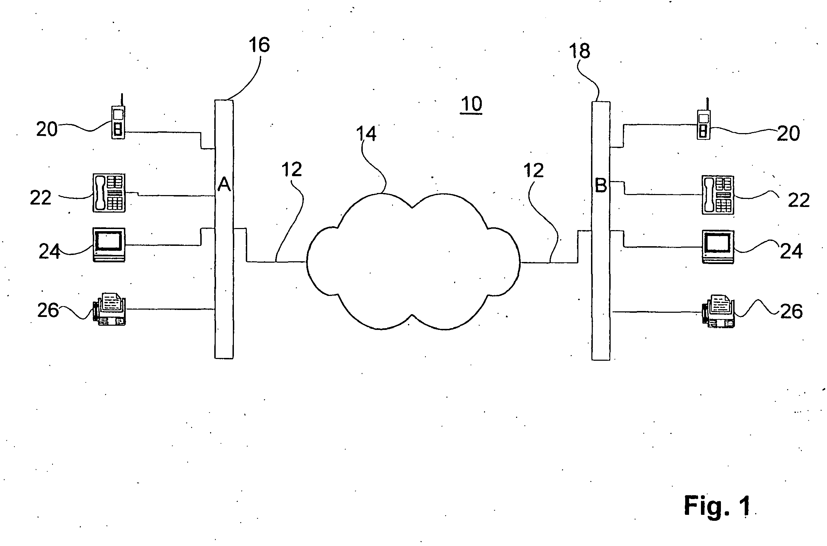

In Fig. 1 ist schematisch ein Leitungsnetz 10 dargestellt, das aus Zugangsleitungsnetzen 12 und einem Verbindungsleitungsnetz 14 besteht. Die Zugangsleitungsnetze 12 verbinden das Verbindungsleitungsnetz 14 mit Anschlüssen 16 und 18 der Fernsprechteilnehmer A und B. Der Anschluss 16 ist dabei dem Fernsprechteilnehmer A und der Anschluss 18 dem Fernsprechteilnehmer B zugeordnet.

An den Anschluss 16 und 18 ist jeweils ein Mobiltelefon 20, ein Telefon 22, ein PC 24 sowie ein Telefax 26 als Telekommunikationsendgeräte angeschlossen.

Will nun beispielsweise der Fernsprechteilnehmer A mit seinem Telekommunikationsendgerät, nämlich seinem Telefon 22, mit dem Fernsprechteilnehmer B telefonieren, wählt er seine Zielrufnummer und wird über entsprechende Vermittlungsstellen in bekannter Weise mit dem Fernsprechteilnehmer B verbunden, wenn dieser den Anruf entgegennimmt.

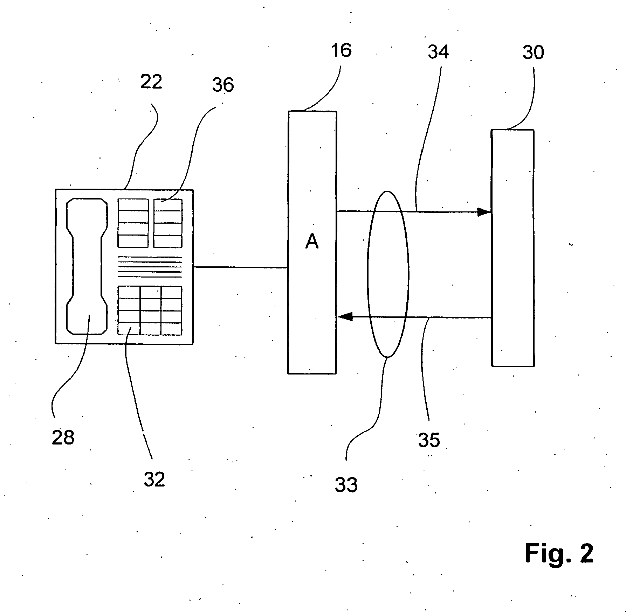

Das erfindungsgemäße Verfahren zur Abfrage der Rufnummern des Anschlusses 16 des Fernsprechteilnehmers A gemäß einem ersten Ausführungsbeispiel ist schematisch in Fig. 2 dargestellt.

Will nun der Fernsprechteilnehmer A seine für seinen Anschluss 16 bereitgestellten Rufnummern abfragen, so kann dies beispielsweise mit seinem Telefon 22 online geschehen. Er nimmt hierfür den Hörer 28 seines Telefons 22 ab, sodass eine Verbindung von dem Telefon 22 über den Anschluss 16 zu der dem Anschluss 16 zugeordneten Vermittlungsstelle 30 hergestellt wird. Anschlie-ßend drückt er eine dem neuen Dienstmerkmal "Abfrage der dem Anschluss 16 zugeordneten Rufnummern" zugeordnete Taste 32, woraufhin das Telefon 22 über den Anschluss 16 der Vermittlungsstelle 30 ein Signal übermittelt. Dieser Vorgang ist mit dem Bezugszeichen 34 versehen. Alternativ kann dieser Vorgang auch softwareunterstützt von dem PC 24 aus erfolgen.

Das Signal 34 ist Teil eines Signalblocks 33. Der Signalblock 33 besteht aus einem spezifizierten Signal 34 zur Abfrage einer Anrufweiterschaltung für alle Rufnummern eines Anschlusses, sowie aus dem Antwortsignal 35, nämlich der Übermittlung der eingerichteten Rufnummern des Anschlusses 16.

Die Vermittlungsstelle 30 erkennt an dem Signal 34, also speziell an einem Parameter durch Vergleich mit einem abgespeicherten Referenzsignal, dass es sich um eine Abfrage der eingerichteten Rufnummern des Anschlusses 16 handelt.

Daraufhin übermittelt die Vermittlungsstelle 30 an den Anschluss 16 und somit an das Telefon 22 die Rufnummern des Anschlusses 16 per Signal 35 und zwar entsprechende dem Protokoll, wie dem Telefon 22 mitgeteilt wird, für welche der Rufnummern des Anschlusses 16 eine Anrufweiterschaltung eingerichtet ist. Die Information ist also so aufgebaut, als ob alle Rufnummern des Anschlusses 16 mit einer Anrufweiterschaltung belegt sind und dies dem Telefon 22 mitgeteilt wird. Die Rufnummern des Anschlusses 16 werden daraufhin zum Telekommunikationsgerät 22 übertragen und dort gespeichert und ggfs. angezeigt. Die Übermittlung der Rufnummern ist durch das Bezugszeichen 35 dargestellt.

Die übermittelten Rufnummern können jederzeit wieder abgefragt werden, beispielsweise durch zweimaliges Drücken der Taste 32 kurz hintereinander. GGfs. wird die Abfrage der eingerichteten Rufnummern von der Vermittlungsstelle 30, wie sie oben dargelegt wurde, wiederholt. Somit werden die abgespeicherten Rufnummern im Telefon 22 aktualisiert. Alternativ hierzu kann die Abfrage auch softwareunterstützt über den PC 24 erfolgen.

Im D-Kanal kommt es dabei zu folgendem Ablauf. Das Telefon 22 beantragt die Übermittlung der dem Anschluss 16 zugeordneten Rufnummer durch Senden der Komponente "Interrogate Diversion Invoke" gemäß EN 300207-1 Abschnitt 9.1.4.1.

Die Abfrage enthält dabei folgende fest vorgegebenen Werte, nämlich Weiterschaltungsprozedur entspricht CFU, "basic service" entspricht t.b.d. und "served user number" entspricht dem Parameter ("virtueller Rufnummer") - Bezugszeichen 34.

Die Vermittlungsstelle 30 empfängt das oben angegebene Signal 34 mit den Werten und vergleicht dieses mit den abgespeicherten Werten, dem Referenzsignal. Bei Übereinstimmung ist eine feste Zuordnung zu dem Dienstmerkmal "Abfrage der eingespeicherten Rufnummern" gegeben. In der Vermittlungsstelle 30 genügt es daher, ausschließlich die dem Anschluss 16 zugeordneten Rufnummern auszulesen und an das Telekommunikationsendgerät, nämlich das Telefon 22, mittels einer "Interrogation Diversion Return Result"-Komponente - Signal 35 - zu übermitteln, vergleiche EN 300207-1, Abschnitt 9.1.4.1.

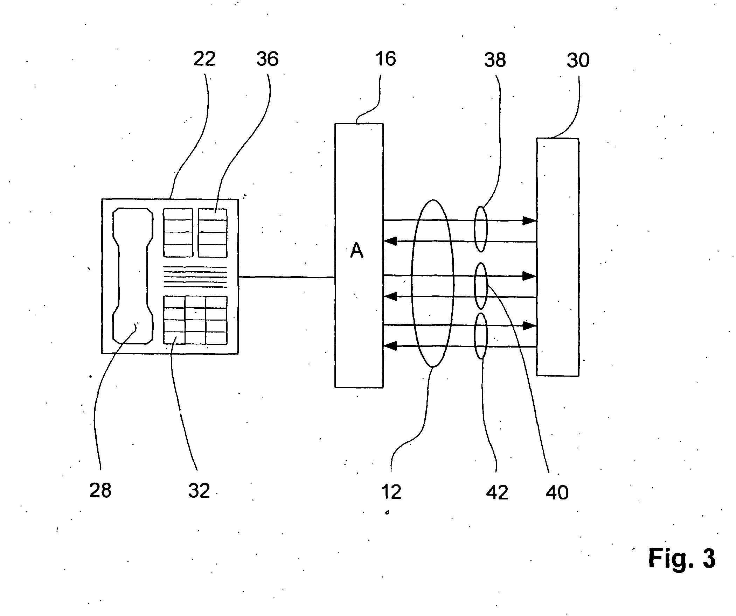

In Fig. 3 ist eine andere Ausführungsform des Verfahrens zur Abfrage der eingerichteten Rufnummer für einen Anschluss 16 dargestellt. Hierbei sendet für diese Abfrage das Telekommunikationsendgerät, beispielsweise das Telefon 22, an die Vermittlungsstelle 30 ein aus einer Folge aus drei Signalblöcken 38 bis 42 bestehendes Signal. Die Signalblöcke 38 bis 42 werden nacheinander von dem Telefon 22 an die Vermittlungsstelle 30 gesendet und von der Vermittlungsstelle 20 wiederum an das Telefon 22 bestätigt.

Der erste Signalblock 38 dient zur Aktivierung der Anrufweiterschaltung aller Rufnummern des Anschlusses 16 an eine nicht vergebene Zielrufnummer. Der zweite Signalblock 40 betrifft die Abfrage der eingerichteten Anrufweiterschaltungen des Anschlusses 16 und der dritte Signalblock 42 dient zur Deaktivierung der Anrufweiterschaltung aller Rufnummern des Anschlusses.

Dieses Verfahren nach der Erfindung hat den Vorteil, dass existierende Protokollmechanismen auf einfache Weise mitverwendet werden können. Die genutzte Funktionalität wird auf das Auslesen der Rufnummern eines Anschlusses eingeschränkt.

### BEZUGSZEICHENLISTE

- 10: Leitungsnetz
- 12: Zugangsleitungsnetz
- 14: Verbindungsleitungsnetz
- 16: Anschluss Fernsprechteilnehmer A
- 18: Anschluss Fernsprechteilnehmer B
- 20: Mobiltelefon
- 22: Telefon
- 24: PC
- 26: Telefax
- 28: Hörer
- 30: Vermittlungsstelle
- 32: Taste
- 33: Signalblock - Abfrage der eingerichteten Rufnummern eines Anschlusses
- 34: Übermittlung des Signals zur Abfrage der dem Anschluss zugeordneten Rufnummern
- 35: Übermittlung der eingerichteten Rufnummern eines Anschlusses
- 36: Display
- 38: Signalblock - Aktivieren aller Rufnummern des Anschlusses der Anrufweiterschaltung
- 40: Signalblock - Abfrage der eingerichteten Anrufweiterschaltung
- 42: Signalblock - Deaktivieren der Anrufweiterschaltung für alle Rufnummern des Anschlusses

## Patentansprüche

1. Verfahren zur Abfrage der einem Anschluss (16, 18) zugeordneten Rufnummern - eingerichtete Rufnummern in einem zur Übertragung von digitalen und analogen Signalen ausgelegten Leitungsnetz (10), an dem Telekommunikationsendgeräte, wie Telefone (22), Telefaxgeräte (26), Modems (24),Mobiltelefone (20) oder ähnliches, über den Anschluss (16, 18) verbunden sind, wobei der Anschluss (16, 18) mit einer zugeordneten Veirmittlungsstelle (30) des Leitungsnetzes (10) verbunden ist, in der die eingerichteten Rufnummern (MSN) abgespeichert sind, wobei die Abfrage der eingerichteten Rufnummern des Anschlusses (16, 18) von der dem Anschluss (16, 18) zugeordneten Vermittlungsstelle (30) über ein Telekommunikationsendgerät (20, 22, 24, 26) des Anschlusses (16, 18) erfolgt, **dadurch gekennzeichnet, dass** eine Zeichengabe-Verbindung zwischen dem Telekommunikationsendgerät (20, 22, 24, 26) und der Viermittlungsstelle (30) zur Bearbeitung des Dienstmerkmals "Abfrage der dem Anschluss zugeordneten Rufnummern" hergestellt wird, dass das Dienstmerkmal "Abfrage der dem Anschluss zugeordneten Rufnummern" folgende Verfahrensschritte umfasst, bei denen zunächst ein erster Signalblock von dem Telekommunikationsendgerät (20, 22, 24, 26) an die Vermittlungstelle (30) zur Aktivierung der Anrufweiterschaltung aller Rufnummern des Anschlusses (16, 18) an eine feste Zielrufnummer gesendet wird; die jedoch physikalisch keinem Teilnehmeranschluss zugeordnet ist - virtuelle Rufnummer-, und dabei Zustände anderer Dienstmerkmale erhalten bleiben; die Vermittlungsstelle bei Übereinstimmung des ersten Signalblocks mit der Zuordnung zu dem Dienstmerkmal "Abfrage einer eingerichteten Rufnummern" die diesem Anschluss (16, 18) zugeordneten Rufnummern über die Zeichengabe-Verbindung mittels eines zweiten Signalblocks (40) unter Verwendung einer "Interrogation Diversion Return Result"- Komponente des Dienstmerkmals "Anrufweiter-Schaltung" an den Anschluss des Telekommunikationsendgerätes (20, 22, 24, 26) sendet und anschliessend von Telekommunikationsendgerät (20, 22, 24, 26) an die Vermittlungstelle (30) ein dritter Signalblock gesendet wird, der die Anrufweiterschaltung aller Rufnummern des Anschlusses an die virtuelle Rufnummer deaktiviert.

2. Verfahren nach Anspruch 1, **dadurch gekennzeichnet, dass** das Signal vom Telekomrnunikationsendgerat (20, 22, 24, 26) an die Vermittlungsstelle (30) durch eine Kombination der Betätigung von Eingabemitteln (32), wie Mausklicks, durch eine Folge der Betätigung von Eingabemitteln (32) und/oder einer Betätigung eines entsprechend zugeordneten Eingabemittels (32), wie einer Taste des Telekommunikationsendgerätes (20, 22, 24, 26), ausgelöst wird.

3. Verfahren nach Anspruch 1 oder 2, **dadurch gekennzeichnet, dass** die von der Vermittlungsstelle (30) übermittelten Rufnummern des Anschlusses (16, 18) im Telekommunikationsendgerät (20, 22, 24, 26) gespeichert werden.

4. Verfahren nach einem der vorangehenden Ansprüche, **dadurch gekennzeichnet, dass** die übermittelten und/oder die gespeicherten Rufnummern in einer Anzeige (36) des Telekommunikationsendgerätes (20, 22, 24, 26) dargestellt werden.

## Claims

1. Method for querying the subscriber numbers associated with a line (16, 18) (assigned subscriber numbers) in a network (10) configured for transmission of digital and analog signals, to which network telecommunications terminals such as telephones (22), fax machines (26), modems (24), mobile telephones (20), or the like, are connected through the line (16, 18), wherein the line (16, 18) is connected to an associated exchange (30) of the network (10) in which exchange the assigned subscriber numbers (MSN) are stored, wherein the assigned subscriber numbers of the connection (16, 18) are queried from the exchange (30) associated with the line (16, 18) through a telecommunications terminal (20, 22, 24, 26) of the line (16, 18), **characterized in that** a signaling connection is established between the telecommunications terminal (20, 22, 24, 26) and the exchange (30) for processing the supplementary service "querying the subscriber numbers associated with the line," **in that** the supplementary service "querying the subscriber numbers associated with the line" comprises the following steps in which a first signal block is initially sent from the telecommunications terminal (20, 22, 24, 26) to the exchange (30) to activate call forwarding of all subscriber numbers of the line (16, 18) to a fixed destination number, although this destination number is not physically associated with any subscriber line (virtual subscriber number), while the states of other supplementary services are preserved; in the event that the first signal block matches the association to the supplementary service "querying an assigned subscriber number," the exchange sends the subscriber numbers associated with the line (16, 18) to the line of the telecommunications terminal (20, 22, 24, 26) via the signaling connection by means of a second signal block (40) using an "interrogation diversion return result" component of the supplementary service "call forwarding," and subsequently the telecommunications terminal (20, 22, 24, 26) sends to the exchange (30) a third signal block that deactivates call forwarding of all subscriber numbers of the connection to the virtual subscriber number.

2. Method according to claim 1, **characterized in that** the signal from the telecommunications terminal (20, 22, 24, 26) to the exchange (30) is triggered by a combination of the actuation of input means (32), such as mouse clicks, by a sequence of the actuation of input means (32) and/or an actuation of an appropriately associated input means (32), such as a button of the telecommunications terminal (20, 22, 24, 26).

3. Method according to claim 1 or 2, **characterized in that** the subscriber numbers of the line (16, 18) transmitted by the exchange (30) are stored in the telecommunications terminal (20, 22, 24, 26).

4. Method according to any one of the preceding claims, **characterized in that** the transmitted and/or stored subscriber numbers are displayed in a display (36) of the telecommunications terminal (20, 22, 24, 26).

## Revendications

1. Procédé d'interrogation des numéros d'appel attribués à une ligne d'accès (16, 18) - numéros d'appel installés - dans un réseau d'accès (10) conçu pour la transmission de signaux numériques et analogiques auquel sont raccordés des terminaux de télécommunications, tels que téléphones (22), appareils de télécopie (26), modems (24), téléphones mobiles (20) ou similaire par l'intermédiaire de la ligne d'accès (16, 18), la ligne d'accès (16, 18) étant reliée à un central téléphonique (30) attribué du réseau d'accès (10) dans lequel sont enregistrés les numéros d'appel installés (MSN), l'interrogation des numéros d'appel installés de la ligne d'accès (16, 18) s'effectuant par le central téléphonique (30) attribué à la ligne d'accès (16, 18) par l'intermédiaire d'un terminal de télécommunications (20, 22, 24, 26) de la ligne d'accès (16, 18), **caractérisé en ce qu'**une connexion de signalisation est établie entre le terminal de télécommunications (20, 22, 24, 26) et le central téléphonique (30) pour le traitement de l'attribut de service « interrogation des numéros d'appel attribués à la ligne d'accès», l'attribut de service « interrogation des numéros d'appel attribués à la ligne d'accès » comprend les étapes suivantes qui consistent, dans un premier temps, à envoyer un premier bloc de signal du terminal de télécommunications (20, 22, 24, 26) au central téléphonique (30) pour l'activation du réacheminement d'appel de l'ensemble des numéros d'appel de la ligne d'accès (16, 18) à un numéro de destination fixe qui, physiquement, n'est cependant attribué à aucune ligne d'abonné - numéro d'appel virtuel - , des états d'autres attributs de service étant conservés ;
en cas de concordance du premier bloc de signal avec l'attribution à l'attributs de service « interrogation d'un numéro d'appel installé », le central téléphonique envoie les numéros d'appel attribués à la ligne d'accès (16, 18) à la ligne d'accès du terminal de télécommunications (20, 22, 24, 26) par l'intermédiaire de la connexion de signalisation au moyen d'un deuxième bloc de signal (40) en utilisant une composante « Interrogation Diversion Retum Result » de l'attribut de service « réacheminement d'appel » et ensuite, le terminal de télécommunications (20, 22, 24, 26) envoie un troisième bloc de signal au central téléphonique (30), ledit troisième bloc de signal désactivant le réacheminement d'appel au numéro d'appel virtuel de l'ensemble des numéros d'appel de la ligne d'accès.

2. Procédé selon la revendication 1, **caractérisé en ce que** le signal envoyé au central téléphonique (30) par le terminal de télécommunications (20, 22, 24, 26) est déclenché par un actionnement combiné de moyens d'entrée (32), tels que clics de souris, par un actionnement successif de moyens d'entrée (32) et/ou un actionnement d'un moyen d'entrée (32) associé de manière correspondante, tel qu'une touche du terminal de télécommunications (20, 22, 24, 26).

3. Procédé selon la revendication 1 ou 2, **caractérisé en ce que** les numéros d'appel de la ligne d'accès (16, 18) transmis par le central téléphonique (30) sont enregistrés dans le terminal de télécommunications (20, 22, 24, 26).

4. Procédé selon l'une des revendications précédentes, **caractérisé en ce que** les numéros d'appel transmis et/ou enregistrés sont visualisés sur un afficheur (36) du terminal de télécommunications (20, 22, 24, 26).
